# EUROPÄISCHE PATENTSCHRIFT

(11) **EP 2 479 425 B1**
(45) Veröffentlichungstag und Bekanntmachung des Hinweises auf die Patenterteilung: **08.03.2017**
(21) Anmeldenummer: 11009426.5
(22) Anmeldetag: 29.11.2011
(51) Int. Cl.: F03D 17/00

(54) **Verfahren zur Überwachung einer statischen und/oder dynamischen Stabilität einer Windenergieanlage**
Method for monitoring the static and/or dynamic stability of a wind energy assembly
Procédé de surveillance d'une stabilité statique et/ou dynamique d'une éolienne

(30) Priorität: 04.12.2010 DE 102010053523
(43) Veröffentlichungstag der Anmeldung: 25.07.2012
(73) Patentinhaber: Nordex Energy GmbH, 22419 Hamburg (DE)
(72) Erfinder: Drossel, Detlef, 22851 Norderstedt (DE); Harms, Ulrich, 22399 Hamburg (DE)
(74) Vertreter: Hauck Patentanwaltspartnerschaft mbB

(56) Entgegenhaltungen:
- DE-A1- 10 065 314
- DE-U1- 20 221 562
- US-A1- 2009 185 901
- US-B2- 6 891 280
- CHIA CHEN CIANG ET AL: "TOPICAL REVIEW; Structural health monitoring for a wind turbine system: a review of damage detection methods", MEASUREMENT SCIENCE AND TECHNOLOGY, IOP, BRISTOL, GB, Bd. 19, Nr. 12, 13. Oktober 2008 (2008-10-13), Seite 122001, XP020144300, ISSN: 0957-0233, DOI: 10.1088/0957-0233/19/12/122001

## Beschreibung

Die vorliegende Erfindung betrifft ein Verfahren zur Überwachung einer statischen und/oder dynamischen Stabilität einer Windenergieanlage.

Aus DE 202 21 562 U1 ist eine Windenergieanlage mit einer Turmschwingungsüberwachung bekannt. Die Windenergieanlage ist mit einer Steuereinrichtung zur Betriebsführung der Windenergieanlage sowie mit einer Einrichtung zur Erfassung des Schwingweges des Turmes ausgestattet. Die Windenergieanlage ist mit Mitteln ausgestattet, um eine Schwingung des Turmes zu erfassen. Wenn festgestellt wird, dass die Turmschwingung und/oder die absolute Auslenkung des Turmes einen vorgebbaren ersten Grenzwert überschreiten, wird die Betriebsführung derart verändert, dass eine weitere Erregung der Turmschwingung vermieden wird. Ferner ist bekannt, die erste Eigenfrequenz des Turmes mit Hilfe der Mittel zur Erfassung der Turmschwingung zu messen.

Aus EP 2 103 915 A1 ist ein Verfahren zur Bestimmung der ersten Turmeigenfrequenz bekannt. Hierzu werden mit Hilfe einer Fourier-Transformation gemessene Beschleunigungswerte ausgewertet und über einen Spektralvektor die Turmeigenfrequenzen bestimmt.

Aus EP 2 063 110 A1 ist ein Verfahren zur Dämpfung von Schwingungen an dem Turm einer Windenergieanlage bekannt. Hierzu wird die Rotordrehzahl abhängig von einer Turmschwingung durch Veränderung des Blatteinstellwinkels modifiziert.

Aus DE 10 2007 063 082 A1 ist ein Verfahren zum Betreiben einer Windenergieanlage bekannt, bei dem der Blatteinstellwinkel für jedes Rotorblatt in Abhängigkeit von einer lateralen Schwingung des Turmes verändert wird, um die durch die äußere Windbewegung induzierte, laterale Schwingung des Turmes zu dämpfen.

Aus DE 28 23 525 B1 ist ein Verfahren zur Errichtung einer Windenergieanlage bekannt, bei dem während der Errichtung ein Turm durch abgespannte Seile derart abgestützt wird, dass dessen erste Eigenschwingungsfrequenz während einer Montage des Maschinenhauses nicht angeregt wird.

Aus DE 197 39 164 B4 ist eine Windenergieanlage mit einem Rotor bekannt, bei der ein auf den Rotor ausgeübtes Gier- und/oder Nickistmoment erfasst und durch Einstellung des Blatteinstellwinkels reduziert wird.

Aus EP 1 959 134 A2 ist ein Verfahren zur Erkennung einer lateralen Turmbeschleunigung bekannt, das zur Erkennung eines asymmetrischen Eisansatzes an den Rotorblättern eingesetzt wird. Hierzu wird die laterale Beschleunigung des Turms mit der Frequenz der Rotorblätter verglichen.

Aus EP 1 643 122 A2 ist ein Verfahren zur Dämpfung von Schwingungen einer Windenergieanlage bekannt, bei dem das Generatormoment abhängig von der Generatordrehzahl und einer Resonanzfrequenz geregelt wird.

Aus US 7,400,055 B2 ist eine Windenergieanlage bekannt, bei der eine laterale Turmschwingung gemessen und durch Regelung des Moments für den Generator und des Blatteinstellwinkels gedämpft wird.

Aus US 6,891,280 B1 ist ein Verfahren zum Betrieb einer Offshore-Windenergieanlage bekannt, bei dem eine Drehzahl, die zu einer Anregung der kritischen Turmeigenfrequenz führen kann, durch eine Steuerung der Windenergieanlage vermieden wird.

Der Erfindung liegt die Aufgabe zugrunde, ein Verfahren zur Überwachung einer statischen und/oder dynamischen Stabilität einer Windenergieanlage zu schaffen, das mit möglichst einfachen Mitteln Fehler und Veränderungen in der Stabilität zuverlässig erkennt.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Das erfindungsgemäße Verfahren dient zur Überwachung einer statischen und/oder dynamischen Stabilität einer Windenergieanlage. Die Windenergieanlage weist einen Turm, ein von dem Turm getragenes Maschinenhaus und einen in oder an dem Maschinenhaus gelagerten Rotor mit um ihre Längsachse verstellbaren Rotorblättern auf. Erfindungsgemäß sind die folgenden Verfahrensschritte vorgesehen:
In einem ersten Schritt erfolgt ein Anregen der Windenergieanlage zu einer Schwingung in mindestens einer Richtung. In einem zweiten nachfolgenden Schritt wird eine Frequenz der angeregten Schwingung der Windenergieanlage erfasst. In einem dritten Schritt erfolgt ein Vergleich der erfassten Frequenz mit einer vorbestimmten Frequenz. In einem vierten Schritt wird ein Alarmsignal generiert, wenn die erfasste Frequenz um mehr als einen Differenzwert von einer vorbestimmten Frequenz abweicht. Die Erfindung beruht auf der Erkenntnis, dass die Änderung der statischen und/oder dynamischen Stabilität der Windenergieanlage zu einer Veränderung einer Eigenfrequenz der Windenergieanlage führt. Daher sieht das erfindungsgemäße Verfahren vor, eine Eigenfrequenz der Windenergieanlage bei einer Schwingung zu messen und die gemessene Frequenz mit einer vorbestimmten Frequenz zu vergleichen. Auf diese Weise kann festgestellt werden, ob sich Veränderungen in der Stabilität der Windenergieanlage und insbesondere ihres Turmes ergeben haben. Eine Veränderung der Stabilität der Windenergieanlage führt zwangsläufig zu einer Veränderung der Frequenz, mit der die Windenergieanlage auf eine Schwingungsanregung reagiert. Anders als bei den aus dem Stand der Technik bekannten Verfahren, die eine gemessene Eigenfrequenz für die Betriebsführung der Windenergieanlage nutzen, wird bei dem erfindungsgemäßen Verfahren eine gemessene Frequenz zur Prüfung der Stabilität der Windenergieanlage genutzt und unabhängig von der Betriebsführung der Windenergieanlage und den durch die Betriebsführung vorgegebenen Parametern ein Alarmsignal erzeugt, das Veränderungen in der Stabilität der Windenergieanlage anzeigt.

Bei dem erfindungsgemäßen Verfahren erfolgt gleichzeitig ein Verstellen des Blatteinstellwinkels von sämtlichen Rotorblättern, wodurch sich die auf die Windenergieanlage wirkende Schubkraft verändert und der Turm somit reproduzierbar zu einer Schwingung angeregt wird. Die Schwingung erfolgt dadurch hauptsächlich in der Richtung senkrecht zu der vom Rotorblatt überstrichenen Fläche. Die Frequenz der so angeregten Schwingung der Windenergieanlage wird bei dem erfindungsgemäßen Verfahren erfasst und ausgewertet. Erfindungsgemäß wird nicht nur der Blatteinstellwinkel eines Rotorblatts verstellt, sondern aus Gründen einer reproduzierbaren Anregung der Schwingung der Windenergieanlage werden sämtliche Rotorblätter gleichzeitig in ihrem Blatteinstellwinkel verstellt.

In einer bevorzugten Ausgestaltung wird zur Anregung der Schwingung der Blatteinstellwinkel um mindestens einen vorbestimmten Winkel, beispielsweise 45°, verstellt. Bevorzugt wird das Rotorblatt vollständig in seine Fahnenposition verstellt.

Um die Windenergieanlage mit ihrem Turm ausreichend für eine Schwingung anzuregen, wird bei der Veränderung des Blatteinstellwinkels eine vorbestimmte Blattverstellgeschwindigkeit gewählt, die groß genug ist, dass der Turm zu einer Schwingung angeregt wird, deren Amplitude eine Auswertung ermöglicht.

Zur Erfassung der Frequenz der angeregten Schwingung der Windenergieanlage wird bevorzugt ein in dem Maschinenhaus angeordneter Beschleunigungssensor verwendet. Die von dem Beschleunigungssensor erfassten Beschleunigungswerte für das Maschinenhaus werden in an sich bekannter Weise in eine Frequenz der Schwingung umgerechnet. Hierbei kann die erfasste Frequenz tiefpassgefiltert werden, um Störeinflüsse zu unterdrücken.

Die vorbestimmte Frequenz, mit der die erfasste Frequenz verglichen wird, ist bevorzugt die erste Turmeigenfrequenz. Die Turmeigenfrequenzen der Windenergieanlage sind aus der theoretischen Berechnung sehr genau bekannt, so dass ein Abweichen der erfassten Frequenz von einer im Vorfeld berechneten Turmeigenfrequenz einen Hinweis darauf bietet, dass die tatsächliche Stabilität der Windenergieanlage von der erwarteten Stabilität abweicht.

Bevorzugt sieht das erfindungsgemäße Verfahren vor, dass ein Alarmsignal nur dann generiert wird, wenn die erfasste Frequenz um mehr als eine vorbestimmte Differenz von der vorbestimmten Frequenz abweicht. Bevorzugt ist hierzu ein erster Differenzwert vorgesehen, um den die erfasste Frequenz größer als die vorbestimmte Frequenz sein darf und ein zweiter Differenzwert, um den die erfasste Frequenz kleiner als die vorbestimmte Frequenz sein darf.

In einer bevorzugten Ausgestaltung wird das Alarmsignal ebenfalls generiert, wenn die erfasste Frequenz einen Mindestabstand zu einer vorbestimmten Anregungsfrequenz, beispielsweise einer 1P- oder einer 3P-Anregungsfrequenz, unterschreitet. Die 1P-Anregung entsteht beispielsweise durch Unwuchten. Die 3P-Anregung bezeichnet die Anregung der Windenergieanlage durch die Bewegung der drei Rotorblätter durch eine ungleichmäßige Windgeschwindigkeitsverteilung, die beispielsweise durch den Turm, Böen, Höhengradienten in der Windgeschwindigkeit und eine Schräganströmung bedingt sein kann.

Um eine zuverlässige Auswertung der erfassten Frequenz sicherzustellen, wird auch die Amplitude der angeregten Schwingung erfasst und ein Alarmsignal nur dann generiert, wenn die Amplitude einen vorbestimmten Minimalwert überschreitet. Bei dieser Ausgestaltung des Verfahrens werden diejenigen Schwingungen verworfen, die nicht zu einem hinreichend großen Amplitudenausschlag bei der Turmschwingung geführt haben.

Die Erfindung wird nachfolgend anhand der Zeichnungen näher erläutert. Es zeigen:

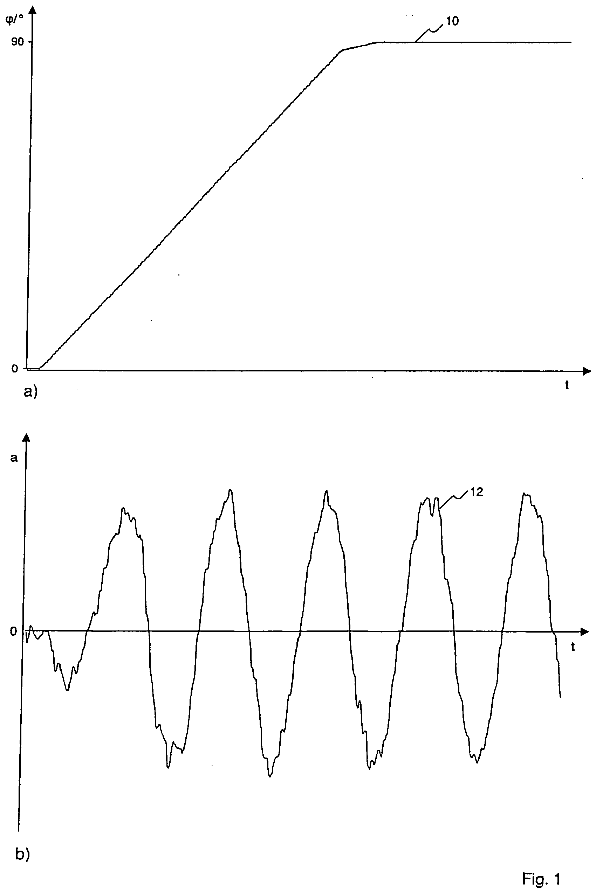

- Fig. 1 a: einen zeitlichen Verlauf der Verstellung des Pitchwinkels,
- Fig. 1 b: einen zeitlichen Verlauf einer Turmschwingung,
- Fig. 2: ein Flussdiagramm zur Auswertung der erfassten Beschleunigungssignale und
- Fig. 3: eine Windenergieanlage in einer schematischen Ansicht von der Seite.

Fig. 1 a und b zeigen jeweils in einem Diagramm über der Zeit t die Schwingungsanregung einer Windenergieanlage. In Fig. 1 a ist die Verstellung des Blatteinstellwinkels 10 über der Zeit dargestellt. Durch ein schnelles Verstellen von einem kleinen Blatteinstellwinkel um ungefähr 0° auf einen Blatteinstellwinkel von ungefähr 90° wird die Windenergieanlage zu einer Schwingung in Z-Richtung angeregt. Die Z-Richtung ist dabei diejenige Richtung, die senkrecht zu der von den Rotorblättern aufgespannten Ebene steht. Die Schwingung wird mit Hilfe eines Beschleunigungssensors aufgenommen, dessen Beschleunigungswerte als Kurve 12 in Fig. 1b dargestellt sind. Es ergibt sich eine sinusähnliche Schwingung, die über der Zeit t aufgetragen ist. Um einen aussagekräftigen Frequenzwert zu erhalten, wird das Signal 12 einer Tiefpassfilterung unterzogen. Hierdurch wird sichergestellt, dass hochfrequente Schwankungen im Beschleunigungssignal 12 unterdrückt werden. Außerdem wird für die erfassten Beschleunigungswerte 12 sichergestellt, dass die Amplitudenwerte eine ausreichende Größe besitzen, um ausgewertet werden zu können. Hierzu kann definiert sein, dass ein Minimalwert für den Betrag eines Amplitudenwertes überschritten sein muss. Um Fehler auszuschließen, kann darüber hinaus vorgesehen sein, dass auch ein Maximalwert für den Betrag eines Amplitudenwertes nicht überschritten sein darf.

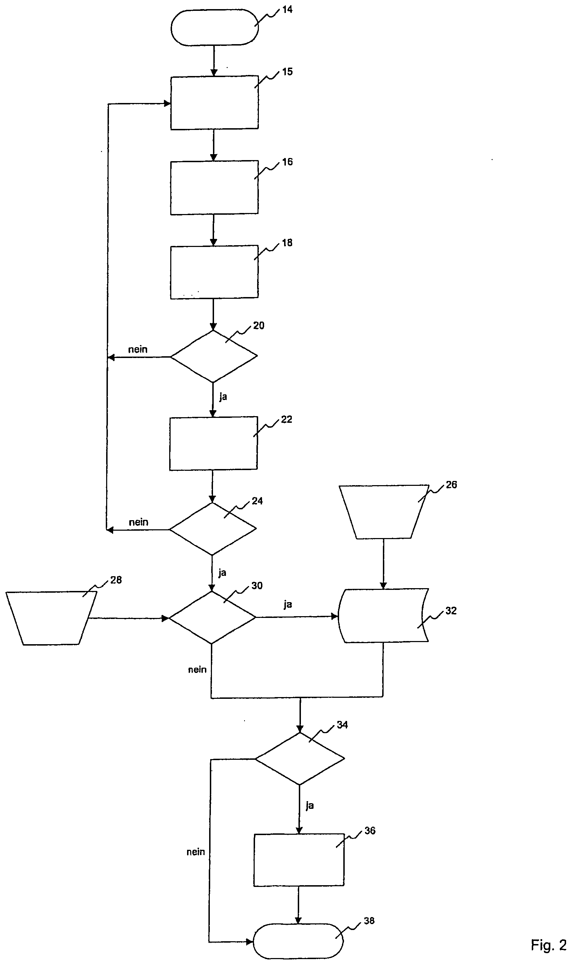

Fig. 2 zeigt den Ablauf des erfindungsgemäßen Verfahrens zur Auslösung des Alarmsignals. Das Verfahren beginnt mit Schritt 14. Im Schritt 15 wird eine Schwingung des Turms der Windenergieanlage angeregt. Die Beschleunigungssignale werden in Schritt 16 erfasst und in einem weiteren Schritt 18 tiefpassgefiltert. Mit einer anschließenden Abfrage 20 werden die gefilterten Beschleunigungssignale auf ihre Auswertbarkeit hin überprüft. Dabei wird geprüft, ob die maximale Amplitude einen vorgegebenen ersten Grenzwert überschritten hat.

Für den Fall, dass der Maximalwert der Amplitude den Grenzwert überschritten hat, wird nachfolgend überprüft, ob der Minimalwert der Amplitude einen unteren Grenzwert überschritten hat. Wenn beide Bedingungen erfüllt sind, genügt der Wert den Anforderungen und kann in Schritt 22 weiter verarbeitet werden. Ansonsten wird im Schritt 15 eine erneute Schwingung des Turms der Windenergieanlage angeregt.

Im Schritt 22 werden die erfassten Beschleunigungssignale in eine erfasste Frequenz fₘ umgerechnet. Dabei wird in an sich bekannter Weise die Frequenz als Kehrwert der Periodenlänge der erfassten Signale bestimmt. Bei dieser Ausgestaltung kann auf eine Fourier-Transformation und eine aufwendige Fourier-Analyse der Signale verzichtet werden. In einem nachfolgenden Schritt 24 wird geprüft, ob die erfasste Frequenz fₘ kleiner als eine vorbestimmte Maximalfrequenz ist und ob die erfasste Frequenz fₘ größer als eine vorbestimmte Minimalfrequenz ist. Auf diese Weise können erfasste Frequenzen, die offensichtlich nicht auf einer Turmeigenschwingung beruhen, von einer weiteren Verarbeitung ausgeschlossen werden. Erfüllt der erfasste Wert fₘ die Anforderungen, so erfolgt in Schritt 30 eine Entscheidung, ob der Wert im Schritt 32 gespeichert werden soll. Diese Entscheidung ist abhängig von einer manuellen Eingabe oder einer entsprechenden Voreinstellung in Schritt 28. Nachfolgend wird in Schritt 34 der Betrag der Differenz der anliegenden Frequenzwerte fₘ und f_{ref} mit einem vorbestimmten Differenzwert Δf verglichen. Die Werte für f_{ref} und Δf werden in Schritt 26 eingegeben oder sind bereits abgespeichert. Weichen die Frequenzwerte fₘ und f_{ref} um mehr als einen vorbestimmten Differenzwert Δf voneinander ab, so wird in Schritt 36 ein Alarm ausgelöst. Andernfalls wird in Schritt 36 kein Alarm ausgelöst und die Programmbearbeitung beendet. Beträgt für einen Turm beispielsweise die erste Turmeigenfrequenz f = 0,3 Hz, so kann der vorbestimmte Differenzwert Δf beispielsweise auf +/- 5 % der ersten Turmeigenfrequenz, also Δf = 15 mHz gesetzt werden.

Die Frequenz der 1P-Anregung ergibt sich hierbei aus der Drehzahl dividiert durch 60, da die Drehzahl üblicherweise in Umdrehungen pro Minute und die Frequenz in Schwingungen pro Sekunde angegeben wird. Die 3P-Anregung, die insbesondere bei ungleichmäßigen Windstärken angefacht wird, ergibt sich zu dem Dreifachen der 1P-Anregung. Im Schritt 34 kann zusätzlich die erfasste Frequenz fₘ mit den Frequenzen der 1P- und der 3P-Anregung verglichen werden, um so ein Alarmsignal zu erzeugen, falls die tatsächliche Turmeigenfrequenz einen vorbestimmten Abstand zu der 1P- oder 3P-Anregungsfrequenz unterschreitet.

In Fig. 2 wird die vorbestimmte Frequenz f_{ref}, beispielsweise eine vorberechnete Turmeigenfrequenz, in Schritt 32 gespeichert. Alternativ ist es auch möglich, eine der zuletzt gemessenen Turmeigenfrequenzen oder einen Mittelwert dieser Turmeigenfrequenzen in Schritt 32 abzuspeichern, um so einen Vergleich gegenüber der zuletzt erfassten Frequenz fₘ vorzunehmen.

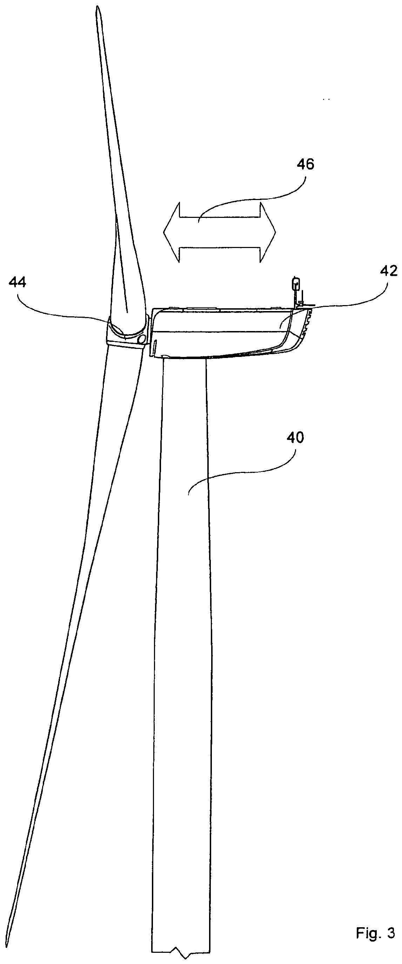

Fig. 3 zeigt eine Windenergieanlage in einer schematischen Ansicht von der Seite. Die Windenergieanlage besitzt einen Turm 40, der an seinem oberen Ende ein Maschinenhaus 42 trägt. Das untere Ende des Turms 40 ist auf einem Fundament (nicht dargestellt) verankert, wobei es sich um ein an Land oder Off-Shore verankertes Fundament handeln kann. An dem Maschinenhaus 42 ist der Rotor mit seinen Rotorblättern gelagert. Der Rotor 44 besitzt drei Rotorblätter, von denen in der Seitenansicht zwei zu erkennen sind. Die durch ein schnelles Verstellen des Blatteinstellwinkels erzeugten Schwingungen führen zu einer Bewegung des Maschinenhauses 42 im Wesentlichen senkrecht zu der von den Rotorblättern aufgespannten Ebene entlang dem Doppelpfeil 46. Die Schwingungsrichtung 46 kann von weiteren, kleineren Schwingungsamplituden überlagert sein, so dass die Bewegung des Maschinenhauses nicht unbedingt eindimensional in Richtung des Doppelpfeils 46 erfolgt, sondern auch Querschwingungen mit einer kleineren Queramplitude aufweisen kann.

## Patentansprüche

1. Verfahren zur Überwachung einer statischen und/oder dynamischen Stabilität einer Windenergieanlage, die einen Turm, ein von dem Turm getragenes Maschinenhaus und einen in oder an dem Maschinenhaus gelagerten Rotor mit mindestens einem um seine Längsachse verstellbaren Rotorblatt aufweist, **gekennzeichnet durch** folgende Verfahrensschritte:
- Anregen der Windenergieanlage zu einer Schwingung in mindestens einer Richtung,
- Erfassen einer Frequenz (fₘ) der angeregten Schwingung,
- Vergleichen der erfassten Frequenz mit einer vorbestimmten Frequenz (f_{ref}) und
- Generieren eines Alarmsignals, wenn die erfasste Frequenz um mehr als einen Differenzwert (Δf) von der vorbestimmten Frequenz abweicht,
**dadurch** gekennzeichnet, dass
der Turm zu der Schwingung **durch** ein Verstellen sämtlicher Rotorblätter gleichzeitig in ihren Blatteinstellwinkel reproduzierbar angeregt wird.

2. Verfahren nach Anspruch 1, **dadurch gekennzeichnet, dass** der Blatteinstellwinkel um mindestens einen vorbestimmten Winkel verstellt wird.

3. Verfahren nach Anspruch 1 oder 2, **dadurch gekennzeichnet, dass** das mindestens eine Rotorblatt in seine Fahnenposition verstellt wird.

4. Verfahren nach einem der Ansprüche 1 bis 3, **dadurch gekennzeichnet, dass** das mindestens eine Rotorblatt mit einer vorbestimmten Blattverstellgeschwindigkeit verstellt wird, die derart groß gewählt ist, dass der Turm zu einer Schwingung angeregt wird.

5. Verfahren nach einem der Ansprüche 1 bis 4, **dadurch gekennzeichnet, dass** die Frequenz der angeregten Schwingung durch Auswertung eines Sensorsignals eines in dem Maschinenhaus angeordneten Beschleunigungssensors erfasst wird.

6. Verfahren nach einem der Ansprüche 1 bis 5, **dadurch gekennzeichnet, dass** die erfasste Frequenz tiefpassgefiltert wird.

7. Verfahren nach einem der Ansprüche 1 bis 5, **dadurch gekennzeichnet, dass** als vorbestimmte Frequenz eine erste Turmeigenfrequenz vorgesehen ist.

8. Verfahren nach einem der Ansprüche 1 bis 7, **dadurch gekennzeichnet, dass** das Alarmsignal generiert wird, wenn die erfasste Frequenz um mehr als einen ersten Differenzwert größer als die vorbestimmte Frequenz ist oder um mehr als einen zweiten Differenzwert kleiner als die vorbestimmte Frequenz ist.

9. Verfahren nach einem der Ansprüche 1 bis 8, **dadurch gekennzeichnet, dass** das Alarmsignal generiert wird, wenn die erfasste Frequenz einen Mindestabstand zu einer vorbestimmten Anregungsfrequenz unterschreitet.

10. Verfahren nach einem der Ansprüche 1 bis 9, **dadurch gekennzeichnet, dass** eine Amplitude der angeregten Schwingung erfasst wird und das Alarmsignal nur dann generiert wird, wenn die Amplitude einen vorbestimmten Minimalwert überschreitet.

## Claims

1. A method for monitoring a static and/or dynamic stability of a wind turbine having a tower, a nacelle which is supported by the tower, and a rotor which is mounted in or on the nacelle and has at least one rotor blade which can be adjusted about its longitudinal axis, the method comprising the steps of:
exciting the wind turbine to oscillate in at least one direction;
detecting a frequency (fₘ) of the excited oscillation;
comparing the detected frequency with a predetermined frequency (f_{ref}); and,
generating an alarm signal when the detected frequency deviates from the predetermined frequency by more than a difference value (Δf) **characterized in that**,
the tower is reproducibly excited to oscillate by adjusting the blade pitch angles of all the rotor blades at the same time.

2. The method according to claim 1, wherein the blade pitch angle is adjusted by at least a predetermined angle.

3. The method according to claim 1 or 2, wherein the at least one rotor blade is adjusted to its feathered position.

4. The method according to one of claims 1 to 3, wherein the at least one rotor blade is adjusted at a predetermined blade pitch adjustment rate, which is selected to be sufficiently high that the tower is excited to oscillate.

5. The method according to one of claims 1 to 4, wherein the frequency of the excited oscillation is detected by evaluating a sensor signal from an acceleration sensor arranged in the nacelle.

6. The method according to one of claims 1 to 5, wherein the detected frequency is low-pass filtered.

7. The method according to one of claims 1 to 5, wherein a first tower natural frequency is provided as the predetermined frequency.

8. The method according to one of claims 1 to 7, wherein the alarm signal is generated if the detected frequency is greater than the predetermined frequency by more than a first difference value or is less than the predetermined frequency by more than a second difference value.

9. The method according to one of claims 1 to 8, wherein the alarm signal is generated when the detected frequency drops below a predetermined excitation frequency by more than a minimum amount.

10. The method according to one of claims 1 to 9, wherein an amplitude of the excited oscillation is detected and the alarm signal is generated only if the amplitude exceeds a predetermined minimum value.

## Revendications

1. Procédé de surveillance d'une stabilité statique et/ou dynamique d'une éolienne qui présente une tour, une salle des turbines portée par la tour et un rotor logé dans ou sur la salle des turbines avec au moins une pale de rotor pouvant être déplacée autour de son axe longitudinal, **caractérisé par** les étapes de procédé suivantes :
- excitation de l'éolienne à une oscillation dans au moins une direction,
- détection d'une fréquence (fₘ) de l'oscillation excitée,
- comparaison de la fréquence détectée à une fréquence prédéterminée (f_{ref}) et
- génération d'un signal d'alarme lorsque la fréquence détectée s'écarte de plus d'une valeur de différence (Δf) de la fréquence prédéterminée,
**caractérisé en ce que**
la tour est excitée à une oscillation par un déplacement de l'ensemble des pales de rotor simultanément de manière reproductible dans leur angle de réglage de pale.

2. Procédé selon la revendication 1, **caractérisé en ce que** l'angle de réglage de pale est déplacé d'au moins un angle prédéterminé.

3. Procédé selon la revendication 1 ou 2, **caractérisé en ce que** l'au moins une pale de rotor est déplacée dans sa position de girouette.

4. Procédé selon une des revendications 1 à 3, **caractérisé en ce que** l'au moins une pale de rotor est déplacée avec une vitesse de déplacement de pale prédéterminée qui est choisie de telle sorte que la tour est excitée à une oscillation.

5. Procédé selon une des revendications 1 à 4, **caractérisé en ce que** la fréquence de l'oscillation excitée est détectée par analyse d'un signal de capteur d'un capteur d'accélération disposé dans la salle des turbines.

6. Procédé selon une des revendications 1 à 5, **caractérisé en ce que** la fréquence détectée est passée à travers un filtre passe-bas.

7. Procédé selon une des revendications 1 à 5, **caractérisé en ce qu'**une première fréquence propre de tour est prévue comme fréquence prédéterminée.

8. Procédé selon une des revendications 1 à 7, **caractérisé en ce que** le signal d'alarme est généré lorsque la fréquence détectée est supérieure de plus d'une première valeur de différence à la fréquence prédéterminée ou est inférieure de plus d'une seconde valeur de différence à la fréquence prédéterminée.

9. Procédé selon une des revendications 1 à 8, **caractérisé en ce que** le signal d'alarme est généré lorsque la fréquence détectée dépasse par le bas un écart minimal par rapport à une fréquence d'excitation prédéterminée.

10. Procédé selon une des revendications 1 à 9, **caractérisé en ce qu'**une amplitude de l'oscillation excitée est détectée et le signal d'alarme n'est alors généré que lorsque l'amplitude dépasse une valeur minimale prédéterminée.
